(19)

Europäisches
Patentamt
European
Patent Office
Office européen
des brevets

(11)  **EP 3 109 044 A1**

(12)  **EUROPEAN PATENT APPLICATION**
published in accordance with Art. 153(4) EPC

(43) Date of publication:
**28.12.2016 Bulletin 2016/52**

(21) Application number: **15752118.8**

(22) Date of filing: **20.02.2015**

(51) Int Cl.:
**B32B 25/04** (2006.01)    **B32B 5/18** (2006.01)
**B32B 27/00** (2006.01)    **C08J 9/36** (2006.01)
**C09K 3/10** (2006.01)

(86) International application number:
**PCT/JP2015/054771**

(87) International publication number:
**WO 2015/125917 (27.08.2015 Gazette 2015/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **20.02.2014   JP 2014030800**

(71) Applicant: **Sekisui Chemical Co., Ltd.
Osaka-shi, Osaka 530-8565 (JP)**

(72) Inventors:
• **KANAZAWA Futoshi
Hasuda-shi
Saitama 349-0198 (JP)**
• **HIRAIKE, Hiroshi
Hasuda-shi
Saitama 349-0198 (JP)**

(74) Representative: **Merkle, Gebhard
Ter Meer Steinmeister & Partner
Patentanwälte mbB
Nymphenburger Straße 4
80335 München (DE)**

(54)  **CLOSED-CELL FOAM WATERSTOP SHEET WITH ADHESION LAYER**

(57)    A closed-cell foam water-stop sheet with an adhesion layer, wherein the closed-cell foam water-stop sheet comprises:

the adhesion layer that comprises a rubber component (A) having a total content of 80% by mass or more of a butyl rubber (a1) and an ethylene-propylene-diene rubber (a2), and a petroleum resin-based tackifier (B), the adhesion layer having a thickness of 0.01 to 2.0 mm; and a closed-cell foam sheet having a closed cell ratio of 70% or more, the closed-cell foam sheet being integrally attached to the adhesion layer, and
wherein a mass ratio of the ethylene-propylene-diene rubber (a2) to the butyl rubber (a1) [(a2)/(a1)] is 0/100 to 93/7,
a content of the petroleum resin-based tackifier (B) is 0.5 to 20 parts by mass based on 100 parts by mass of the rubber component (A), and
the closed-cell foam water-stop sheet with an adhesion layer has a 25% compression stress of 10 to 800 kPa.

EP 3 109 044 A1

**Description**

Technical Field

The present invention relates to a closed-cell foam water-stop sheet with an adhesion layer used as a water-stop sealing material.

Background Art

Currently, in various fields such as construction and electronics, water-stop sealing materials comprising a foam are widely used in order to fill gaps in various structures to prevent the ingress of water. Such a water-stop sealing material is disposed in a compressed state in an adherend portion, and is composed so as to t interface of the adherend portion without a clearance by resilient stress trying to recover the shape from the compressed state. Accordingly, when the compression flexibility of the water-stop sealing material is low, the resilient stress of the water-stop sealing material is so strong that the adherend portion deforms, and water stop decreases, resulting in the problem of insufficient water stop properties.

Therefore, use of an open-cell foam having excellent compression flexibility as a water-stop sealing material is considered. However, the cells communicate with each other in the open-cell foam, and therefore, water easily passes through the foam. Thus, a problem is that sufficient water stop properties cannot be obtained.

As water-stop sealing materials that solve this problem, for example, water-stop sealing materials using a rubber-based resin closed-cell foam sheet having closed cells are described in Patent Literatures 1 and 2.

Citation List

Patent Literature

   PTL1: International Publication No. WO 2007/072885
   PTL2: International Publication No. WO 2011/039877

Summary of the invention

Technical Problem

The rubber-based resin closed-cell foam sheets as described in Patent Literatures 1 and 2 are required to have excellent moldability because the sheets are used in various products. The sheets are also required to have strong adhesiveness to an adherend portion. In contrast, the sheets are required to have excellent peelability and readherability (hereinafter also referred to as "reworkability") so as to finely correct the attachment position on attaching the sheet to a product.

Although the rubber-based resin closed-cell foam sheets described in Patent Literatures 1 and 2 have moldability, reworkability, adhesiveness to an adherend surface, and water stop properties compared with conventional products, further improvements in the performance are desired.

The present invention has been made in view of the above conventional problem and provides a closed-cell foam water-stop sheet with an adhesion layer, wherein the closed-cell foam water-stop sheet has good moldability and reworkability as well as high adhesion strength to an adherend surface and is excellent in water stop properties.

Solution to Problem

The gist of the present invention is a closed-cell foam water-stop sheet with an adhesion layer, wherein the closed-cell foam water-stop sheet comprises: the adhesion layer that comprises a rubber component (A) having a total content of 80% by mass or more of a butyl rubber (a1) and an ethylene-propylene-diene rubber (a2), and a petroleum resin-based tackifier (B), the adhesion layer having a thickness of 0.01 to 2.0 mm; and a closed-cell foam sheet having a closed cell ratio of 70% or more, the closed-cell foam sheet being integrally attached to the adhesion layer, and wherein a mass ratio of the ethylene-propylene-diene rubber (a2) to the butyl rubber (a1) [(a2)/(a1)] is 0/100 to 93/7, a content of the petroleum resin-based tackifier (B) is 0.5 to 20 parts by mass based on 100 parts by mass of the rubber component (A), and the closed-cell foam water-stop sheet with an adhesion layer has a 25% compression stress of 10 to 800 kPa.

Advantageous Effects of Invention

According to the present invention, it is possible to provide a closed-cell foam water-stop sheet with an adhesion layer, wherein the closed-cell foam water-stop sheet has good moldability and reworkability as well as high adhesion strength to an adherend surface and is excellent in water stop properties.

Description of Embodiment

The closed-cell foam water-stop sheet with an adhesion layer of the present invention is a closed-cell foam water-stop sheet with an adhesion layer, wherein the closed-cell foam water-stop sheet comprises: the adhesion layer that comprises a rubber component (A) having a total content of 80% by mass or more of a butyl rubber (a1) and an ethylene-propylene-diene rubber (a2), and a petroleum resin-based tackifier (B), the adhesion layer having a thickness of 0.01 to 2.0 mm; and a closed-cell foam sheet having a closed cell ratio of 70% or more, the closed-cell foam sheet being integrally attached to the adhesion layer, and wherein a mass ratio of the ethylene-propylene-diene rubber (a2) to the butyl rubber (a1) [(a2)/(a1)] is 0/100 to 93/7, a content of the petroleum resin-based tackifier (B) is 0.5 to 20 parts by mass based on 100 parts by mass of the rubber component (A), and the closed-cell foam water-stop sheet with an adhesion layer has a 25% compression stress of 10 to 800 kPa.

[Adhesion Layer]

The adhesion layer used in the present invention is a layer that comprises a rubber component (A) having a total content of 80% by mass or more of a butyl rubber (a1) and an ethylene-propylene-diene rubber (a2), and a petroleum resin-based tackifier (B) and that has a thickness of 0.01 to 2.0 mm. In the present invention, the rubber component (A) and the petroleum resin-based tackifier (B) are used in the adhesion layer, and thus, it is possible to provide a closed-cell foam sheet with an adhesion layer excellent in reworkability and water stop properties.

<Rubber Component (A)>

The rubber component (A) in the present invention has a total content of 80% by mass or more of a butyl rubber (a1) and an ethylene-propylene-diene rubber (a2). If the total content of the butyl rubber (a1) and the ethylene-propylene-diene rubber (a2) is less than 80% by mass, the water stop properties decrease.
The total content of the butyl rubber (a1) and the ethylene-propylene-diene rubber (a2) contained in the rubber component (A) is 80% by mass or more, preferably 85% by mass or more, more preferably 90% by mass or more, further preferably 95% by mass or more, and still further preferably 100% by mass, in view of improving the reworkability and the water stop properties.
The rubber component (A) has a mass ratio of the ethylene-propylene-diene rubber (a2) to the butyl rubber (a1) [(a2)/(a1)] of 0/100 to 93/7. If the mass ratio [(a2)/(a1)] is within the range, the moldability, reworkability, and water stop properties are improved.
In the present invention, the mass ratio [(a2)/(a1)] is preferably 1/99 to 90/10, more preferably 1/99 to 85/15, further preferably 1/99 to 80/20, still further preferably 1/99 to 75/25, still further preferably 2/98 to 70/30, still further preferably 3/97 to 50/50, and still further preferably 5/95 to 30/70, in view of moldability, reworkability, and water stop properties.

(Butyl rubber (a1))

As the butyl rubber in the present invention, in addition to the butyl rubber (IIR), halogenated butyl rubbers also can be used. Examples of the halogenated butyl rubbers include chlorinated butyl rubbers and brominated butyl rubbers. Among these, in view of improvement in the kneadability on extrusion and the flexibility after sheet molding, the butyl rubber (IIR) is preferably used.
The Mooney viscosity ML (1 + 8) of the butyl rubber at 125°C is preferably 20 to 60, more preferably 25 to 55, and further preferably 25 to 40. If the Mooney viscosity is within the range, the cohesion is improved, and thus the strength of a molded article increases. This can reduce the load applied on the kneader on kneading, and the moldability is improved.

(Ethylene-propylene-diene rubber (a2))

The ethylene-propylene-diene rubber is an ethylene-propylene rubber (EPM) as a copolymer of ethylene and propylene into which a small amount of a third component has been introduced to allow its backbone to have double bonds. Examples of the third component include ethylidene norbornene (ENB), 1,4-hexadiene (1,4-HD), and dicyclopentadiene (DCP).

The diene content in the ethylene-propylene-diene rubber (a2) is preferably 1 to 15% by mass, more preferably 2 to 12% by mass, and further preferably 3 to 10% by mass, in view of preventing heat generation on extrusion kneading and improving the mechanical properties such as elongation.

The Mooney viscosity ML (1 + 4) of the ethylene-propylene-diene rubber (a2) at 125°C is preferably 15 to 70, more preferably 15 to 60, further preferably 20 to 50, and still further preferably 24 to 30. If the Mooney viscosity of the ethylene-propylene-diene rubber (a2) at 125°C is the lower limit or more, the cohesion is improved, and thus the strength of a molded article increases. If the Mooney viscosity is the upper limit or less, the load applied on the kneader on kneading is reduced, and thus the moldability is improved.

Examples of commercially available ethylene-propylene-diene rubbers include EP21, EP22, and EP33 (manufactured by JSR Corporation), ESPRENE 567 (manufactured by SUMITOMO CHEMICAL Co., Ltd.), and EPT3045 (manufactured by Mitsui Petrochemical Industries, Ltd.).

The rubber component (A) may contain a rubber other than the butyl rubber (a1) and the ethylene-propylene-diene rubber (a2). Examples of other rubbers are not particularly limited as long as they have rubber elasticity at room temperature (25°C). Examples of the rubbers include chloroprene rubbers (CR), isoprene rubbers (IR), natural rubbers, styrene-butadiene copolymerized rubbers (SBR), butadiene rubbers (BR), urethane rubbers, fluororubbers, acrylic rubbers, and silicone rubbers. These may be used singly, or in combinations of two or more.

<Petroleum Resin-Based Tackifier (B)>

In the present invention, for the purpose of improving the adhesiveness to the adherend surface of the closed-cell foam water-stop sheet with an adhesion layer, the petroleum resin-based tackifier (B) is used. The petroleum resin-based tackifier (B) in the present invention refers to a tackifier prepared by cationic polymerizing a fraction that contains unsaturated hydrocarbons obtained from thermal decomposition of petroleum naphtha and the like.

Although a tackifier has been conventionally incorporated to rubber molding articles, it has been difficult for tackifiers usually used to improve all of the reworkability, the adhesiveness to adherend surface, and the water stop properties to a high level. However, the present inventors have intensively studied to find that, in the case where the petroleum resin-based tackifier is used, specific effects, that is, an adhesion layer that has good reworkability and high adhesiveness to an adherend surface, and furthermore, is excellent in water stop properties can be achieved, having completed the present invention.

In the present invention, the reason why use of the petroleum resin-based tackifier (B) improves the adhesiveness of the closed-cell foam water-stop sheet with an adhesion layer to an adherend surface is unknown, but it is believed that the improved adhesiveness results from the good dispersibility of the petroleum resin-based tackifier into the rubber component.

Examples of the petroleum resin-based tackifier (B) include C5-based petroleum resin-based tackifiers, C9-based petroleum resin-based tackifiers, C5-C9 copolymerized petroleum resin-based tackifiers, coumarone resin-based tackifiers, coumarone-indene-based resin-based tackifiers, pure monomer resin-based tackifiers, dicyclopentadiene-based petroleum resin-based tackifiers, and tackifiers composed of hydrides thereof.

Among these, in view of improving the adhesiveness of the closed-cell foam water-stop sheet with an adhesion layer to an adherend surface and in view of the compatibility with the rubber component (A), C5-based petroleum resin-based tackifiers, C9-based petroleum resin-based tackifiers, and C5-C9 copolymerized petroleum resin-based tackifiers are preferred, and C5-based petroleum resin-based tackifiers are more preferred.

The content of the petroleum resin-based tackifier (B) based on 100 parts by mass of the rubber component (A) is 0.5 to 20 parts by mass, preferably 1.5 to 15 parts by mass, more preferably 3 to 12 parts by mass, and further preferably 3.5 to 9 parts by mass, in view of ensuring the water stop properties by improving the adhesiveness and in view of maintaining appropriate flexibility to improve the performance on the water pressure. If the content of petroleum resin-based tackifier (B) based on 100 parts by mass of the rubber component (A) is less than the lower limit, the water stop performance decreases. If the content exceeds the upper limit, the extrusion moldability decreases.

<Additives Used in Adhesion Layer>

The adhesion layer may comprise additives. Examples of the additives include flame retardants, antioxidants, fillers, pigments, colorants, fungicides, foaming aids, slip agents, deactivators, and flame-retardant aids.

Examples of the flame retardants include metal hydroxides such as aluminum hydroxide and magnesium hydroxide as well as bromine-based flame retardants such as decabromodiphenyl ether, and phosphorus-based flame retardants such as ammonium polyphosphate.

Examples of the antioxidants include phenolic antioxidants and sulfur-based antioxidants.

Examples of the fillers include talc, calcium carbonate, bentonite, carbon black, fumed silica, aluminum silicate, acetylene black, and aluminum powder. One of these additives may be used alone, or two or more of these additives may be used in combination.

<Thickness of Adhesion Layer>

The thickness of the adhesion layer is 0.01 to 2.0 mm, preferably 0.03 to 1.0 mm, and more preferably 0.05 to 0.3 mm. A thickness within the range is preferred because the adhesion performance is exerted and warpage becomes unlikely to occur. As used herein, the "warpage" refers to a state where when the closed-cell foam water-stop sheet of the present invention is cut into a piece of 500 mm x 500 mm and placed on a flat stage, a portion of the cut closed-cell foam water-stop sheet is released from the stage by 15 mm or more and is lifted.

<Method for Producing Adhesion Layer>

The method for producing the adhesion layer is not particularly limited. The adhesion layer can be obtained by melt-kneading the rubber component (A), the petroleum resin-based tackifier (B), and additives by an extruder followed by extrusion molding, calender molding, inflation molding, or solution cast molding, where a resin is melted into a solution, which is evaporated to extract only the resin. As the molding method, extrusion molding is preferred in view of productivity and the like.

[Closed-Cell Foam Sheet]

The closed-cell foam sheet used in the present invention is not particularly limited as long as the closed cell ratio is 70% or more. However, in view of water stop properties, olefin-based resin foam and rubber-based resin foams are preferred, and olefin-based resin foams are more preferred.
Specifically, a closed-cell foam sheet is preferred which is produced by a method of molding into a sheet shape a foamable resin composition obtained by kneading a olefin-based resin, a rubber-based resin, and a foaming agent, to prepare a foamable resin sheet; then crosslinking the foamable resin sheet by ionizing radiation or the like; and then passing the foamable resin sheet through a heating furnace to foam it.

<Olefin-Based Resin>

As the olefin-based resin, which is a raw material of the closed-cell foam sheet, one or more selected from polyethylene-based resins, polypropylene-based resins, propylene-ethylene block copolymers, ethylene-$\alpha$-olefin copolymers mainly comprising ethylene, polypropylene-based resins, propylene-$\alpha$-olefin copolymers mainly comprising propylene, ethylene-propylene-butene ternary copolymers mainly comprising propylene, polybutene and polymethylpentene are preferred.
Examples of the polyethylene-based resins include low-density polyethylene, medium-density polyethylene, high-density polyethylene, linear low-density polyethylene, ethylene-vinyl acetate copolymers mainly comprising ethylene, and ethylene-acrylate ethyl copolymers mainly comprising ethylene.
Examples of the $\alpha$-olefin constituting the ethylene-$\alpha$-olefin copolymers include propylene, 1-butene, 1-pentene, 4-methyl-1-pentene, 1-hexene, 1-heptene, and 1-octene.
Examples of the $\alpha$-olefin constituting the propylene-$\alpha$-olefin copolymers include ethylene, 1-butene, 1-pentene, 4-methyl-1-pentene, 1-hexene, 1-heptene, and 1-octene. One of these olefin-based resins may be used alone, or two or more of these olefin-based resins may be used in combination.
Among these, in view of improving the water stop properties, low-density polyethylene and high-density polyethylene are preferred, and low-density polyethylene and high-density polyethylene are preferably mixed to be used.

<Rubber-Based Resin>

As the rubber-based resin, in view of improving the water stop properties, acrylonitrile-butadiene rubbers are preferred. As the acrylonitrile-butadiene rubber, one having an acrylonitrile component content of 30 to 50% by mass is preferred, one having an acrylonitrile component content of 35 to 50% by mass is more preferred, and one having an acrylonitrile component content of 40 to 45% by mass is further preferred. If the acrylonitrile component content is within the range, the water stop properties are improved. Incidentally, in the case where a plurality of acrylonitrile-butadiene rubbers is used, the average weight is used as the acrylonitrile component content.
The rubber other than the acrylonitrile-butadiene rubber constituting the rubber-based resin is not particularly limited as long as it has rubber elasticity at room temperature (25°C). Examples of the rubber include chloroprene rubbers (CR), isoprene rubbers (IR), butyl rubbers (IIR), natural rubbers, styrenebutadiene copolymerized rubbers (SBR), butadiene rubbers (BR), ethylene-propylene-diene rubbers (EPDM), urethane rubbers, fluororubbers, acrylic rubbers, and silicone rubbers. One of these may be used alone, or two or more of these may be used in combination.

<Foaming Agent>

As the foaming agent, a thermally decomposable foaming agent that decomposes by heat to generate a gas is preferred. Examples of the thermally decomposable foaming agent include azodicarbonamide, benzenesulfonyl hydrazide, dinitrosopentamethylenetetramine, toluenesulfonyl hydrazide, and 4,4-oxybis(benzenesulfonyl hydrazide). One of these may be used alone, or two or more of these may be used in combination.

The amount of the thermally decomposable foaming agent blended is preferably 1 to 30 parts by mass, more preferably 3 to 25 parts by mass, and further preferably 5 to 20 parts by mass, based on 100 parts by mass of the rubber-based resin. When the amount of the thermally decomposable foaming agent blended is too small, the apparent density increases without increasing the expansion ratio, and thus, the resilience may increase. When the amount of the thermally decomposable foaming agent blended is too large, due to a decrease in the apparent density, the compression set increases, and the shape recovery properties of the crosslinked and foamed rubber decrease, and as a result, the water stop properties over a long period cannot be maintained in some cases.

<Additives Used in Closed-Cell Foam Sheet>

The closed-cell foam sheet may comprise additives. Examples of the additives include flame retardants, antioxidants, fillers, pigments, colorants, fungicides, foaming aids, slip agents, deactivators, and flame-retardant aids.

Examples of the flame retardants include metal hydroxides such as aluminum hydroxide and magnesium hydroxide as well as bromine-based flame retardants such as decabromodiphenyl ether and phosphorus-based flame retardants such as ammonium polyphosphate.

Examples of the antioxidants include phenolic antioxidants and sulfur-based antioxidants.

Examples of the fillers include talc, calcium carbonate, bentonite, carbon black, fumed silica, aluminum silicate, acetylene black, and aluminum powder. One of these additives may be used alone, or two or more of these additives may be used in combination.

<Thickness of Closed-Cell Foam Sheet>

The thickness of the closed-cell foam sheet is appropriately selected according to the use application and is not particularly limited, but it is preferably 0.05 to 15 mm, more preferably 0.1 to 10 mm, and further preferably 1 to 8 mm. A thickness within the range is preferred because warpage becomes unlikely to occur.

<Apparent Density of Closed-Cell Foam Sheet>

The apparent density of the closed-cell foam sheet is preferably 15 to 700 $kg/m^3$, more preferably 17 to 600 $kg/m^3$, and further preferably 20 to 500 $kg/m^3$, in view of improving the flexibility of the closed-cell foam sheet. If the apparent density is within the range, the resilience does not increase too high, and thus, the workability becomes good. Incidentally, even in the case where the apparent density of the closed-cell foam sheet is high, the sheet can be used by applying the sheet with its compressibility reduced.

<Closed Cell Ratio of Closed-Cell Foam Sheet>

The closed-cell foam sheet used in the present invention has a closed cell ratio of 70 % or more, and open cells may be included in some of the cells. The closed cell ratio of the closed-cell foam sheet is preferably 70 to 100%, more preferably 80 to 100%, and further preferably 83 to 100%, in view of the water stop properties.

The closed cell ratio in the present invention refers to one measured by the following procedure.

First, a test piece having a planar square shape having a side of 5 cm and having a certain thickness is cut from the closed-cell foam sheet. Then, the thickness of the test piece is measured to calculate the apparent volume of the test piece $V_1$, and the weight of the test piece $W_1$ is measured.

Next, the volume of the cells $V_2$ is calculated based on the following formula. The density of the resin constituting the test piece is p $g/cm^3$.

the volume of the cells $V_2 = V_1 - W_1/\rho$

Next, the test piece is sunk in distilled water at 23°C at a depth of 100 mm from the water surface, and a pressure of 15 kPa is applied to the test piece over 3 minutes. Then, the test piece is taken out of the water, moisture attached to the surface of the test piece is removed, the weight of the test piece $W_2$ is measured, and the open cell ratio $F_1$ and the closed cell ratio $F_2$ are calculated based on the following formulas.

$$\text{the open cell ratio } F_1\,(\%) = 100 \times (W_2 - W_1)/V_2$$

$$\text{the closed cell ratio } F_2\,(\%) = 100 - F_1$$

<Method for Producing Closed-Cell Foam Sheet>

The method for producing the closed-cell foam sheet used in the present invention is not particularly limited, but the closed-cell foam sheet of the present invention is preferably produced by a method of molding into a sheet shape a foamable resin composition obtained by kneading a rubber-based resin, a tackifying resin, additives, and a foaming agent, to prepare a foamable resin sheet; then crosslinking the foamable resin sheet by ionizing radiation or the like; and then passing the foamable resin sheet through a heating furnace to foam it.

[Method for Producing Foamable Resin Sheet]

Examples of the method for producing a foamable resin sheet include a method for producing a foamable resin sheet by kneading a foamable resin composition using a kneading machine such as a Banbury mixer or a pressure kneader, and then continuously extruding the foamable resin composition by an extruder, a calender, conveyor belt casting, or the like.

[Method for Crosslinking Foamable Resin Sheet]

Next, examples of the method for crosslinking the foamable resin sheet include crosslinking by ionizing radiation, crosslinking by sulfur or a sulfur compound, and crosslinking by an organic peroxide.

When the foamable resin sheet is crosslinked by ionizing radiation, examples of the ionizing radiation include light, $\gamma$ rays, and electron beams. The dose of the ionizing radiation is preferably 0.5 to 15 Mrad, and more preferably 0.7 to 10 Mrad.

When crosslinking is performed by ionizing radiation, a closed-cell foam sheet having uniform cells with a small diameter can be obtained. Such a closed-cell foam sheet having uniform cells with a small diameter has a smooth surface, a large area in contact with an adherend surface, and improved adhesiveness, and therefore has excellent water stop properties.

When the foamable resin sheet is crosslinked by an organic peroxide, examples of the organic peroxide include diisopropylbenzene hydroperoxide, 2,4-dichlorobenzoyl peroxide, benzoyl peroxide, t-butyl perbenzoate, cumyl hydroperoxide, t-butyl hydroperoxide, 1,1-di(t-butylperoxy)-3,3,5-trimethylhexane, n-butyl-4,4-di(t-butylperoxy)valerate, $\alpha,\alpha'$-bis(t-butylperoxyisopropyl)benzene, 2,5-dimethyl-2,5-di(t-butylperoxy)hexyne-3, and t-butylperoxycumene.

The amount of the organic peroxide blended is preferably 0.05 to 10 parts by mass, and more preferably 0.1 to 7 parts by mass, based on 100 parts by mass of the rubber-based resin.

[Method for Foaming Foamable Resin Sheet]

Examples of the method for foaming the foamable resin sheet can include a batch method using an oven or the like and a continuous foaming method in which the foamable resin sheet is formed into a long sheet shape and continuously passed through a heating furnace.

The temperature on foaming the foamable resin sheet is preferably 200 to 300°C, and more preferably 220 to 280°C, although the temperature depends on the type of the foaming agent used.

[25% Compression Stress of Closed-Cell Foam Water-Stop Sheet with Adhesion Layer]

The 25% compression stress of the closed-cell foam water-stop sheet with an adhesion layer of the present invention is 10 to 800 kPa, preferably 20 to 700 kPa, and more preferably 25 to 500 kPa. If the closed-cell foam water-stop sheet with an adhesion layer has a 25% compression stress within the range, the processability becomes good and the assemblability is improved. Incidentally, the 25% compression stress can be measured in accordance with the method described in the example.

[Method for Producing Closed-Cell Foam Water-Stop Sheet with Adhesion Layer]

The method for producing the closed-cell foam water-stop sheet with an adhesion layer of the present invention is not particularly limited, but the closed-cell foam water-stop sheet with an adhesion layer of the present invention can be produced by laminating a closed-cell foam sheet produced in accordance with the method and an adhesion layer produced in accordance with the method.

Specifically, the closed-cell foam water-stop sheet with an adhesion layer of the present invention can be obtained by a method in which the materials of the adhesion layer are continuously supplied to a single-screw or double-screw extruder and kneaded in the kneading section at a temperature at or above the melting point of the resin, and the melted resin is bonded onto the closed-cell foam sheet at a resin pressure of 80 to 250 kg/cm$^2$, a pinch pressure of 0.1 to 10.0 kg/cm$^2$, and a pinch roll temperature of 10 to 50°C (extrusion molding).

[Example]

The present invention will be described in more detail by Examples, but the present invention is not limited in any way by these examples.

The materials used in the following Examples and Comparative Examples are as follows.

• butyl rubber (IIR) butyl rubber (1): manufactured by JSR Corporation, "BUTYL065"

$$\text{Mooney viscosity ML } (1+8) \; 125°C = 32$$

butyl rubber (2): manufactured by JSR Corporation, "BUTYL268"

$$\text{Mooney viscosity ML } (1+8) \; 125°C = 51$$

• Ethylene-propylene-diene rubber (EPDM)
ethylene-propylene-diene rubber (1): manufactured by JSR Corporation, "EP21"

$$\text{Mooney viscosity ML } (1+4) \; 125°C = 26$$

ethylene-propylene-diene rubber (2): manufactured by JSR Corporation, "EP25"

$$\text{Mooney viscosity ML } (1+4) \; 125°C = 63$$

ethylene-propylene-diene rubber (3): manufactured by JSR Corporation, "EP24"

$$\text{Mooney viscosity ML } (1+4) \; 125°C = 42$$

• Acrylonitrile-butadiene rubber (NBR)

manufactured by Zeon Corporation, "Nipol DL101L"
acrylonitrile component content: 42.5% by mass

• liquid acrylonitrile-butadiene (liquid NBR)

manufactured by Zeon Corporation, "Nipol 1312"

• Low-density polyethylene (LDPE)

manufactured by Japan Polyethylene Corporation, "Novatec LE520H"

- High-density polyethylene (HDPE)

  manufactured by Prime Polymer Co., Ltd., "HI-ZEX 2100JP"

- Petroleum resin-based tackifier

  petroleum resin-based tackifier (1): manufactured by Zeon Corporation, "Quintone R-100"
  petroleum resin-based tackifier (2): manufactured by Zeon Corporation, "Quintone A-100"
  petroleum resin-based tackifier (3): manufactured by Zeon Corporation, "Quintone G-115"

- Rosin diol-based tackifier

  manufactured by Arakawa Chemical Industries, Ltd., "PINECRYSTAL D-6011"

- Terpene phenol-based tackifier

  YASUHARA CHEMICAL CO.,LTD., "YS Polyster T80"

- ADCA(1) (azodicarbonamide)

  manufactured by Otsuka Chemical Co., Ltd., "Unifoam SO-G3IST"

- ADCA(2) (azodicarbonamide) manufactured by Otsuka Chemical Co., Ltd., "SO-L"
- Phenolic antioxidant (1)

  manufactured by ADEKA CORPORATION, "Adekastab AO-60P"

- Phenolic antioxidant (2)

  manufactured by ADEKA CORPORATION, "Adekastab AO-50"

- Sulfur-based antioxidant

  manufactured by OUCHI SHINKO CHEMICAL INDUSTRIAL CO.,LTD., "NOCRAC 4005"

- slip agent

  manufactured by SAKAI CHEMICAL INDUSTRY CO., LTD., "KP720B"

- Deactivator

  manufactured by ADEKA CORPORATION, "Adekastab CDA-1"

- Titanium oxide

  manufactured by SAKAI CHEMICAL INDUSTRY CO., LTD., "SR-1"

- Carbon black

  manufactured by Asahi Carbon Co., Ltd., "#60"

EXAMPLE 1

<Production of Closed-Cell Foam Sheet>

Blended were 100 parts by mass of a mixed product of the low-density polyethylene and the high-density polyethylene (mass ratio [low-density polyethylene/high-density polyethylene] = 70/30) with 14 parts by mass of ADCA (1), 0.5 parts by mass of the phenolic antioxidant (1), 0.2 parts by mass of the sulfur-based antioxidant, 1 part by mass of the slip agent, 0.5 parts by mass of the deactivator, and 1 part by mass of titanium oxide to obtain a mixture, which was continuously supplied into an extruder, where the mixture was melt-kneaded and extruded to obtain an uncrosslinked and unfoamed sheet.

The sheet obtained was irradiated with an electron beam at a dose of 7.4 Mrad and an accelerating voltage of 560 kV to obtain a crosslinked and unfoamed sheet.

The crosslinked and unfoamed sheet obtained was heated in a foaming furnace to 240°C to decompose and foam ADCA (azodicarbonamide) to obtain a closed-cell foam sheet having an apparent density of 35 kg/m$^3$ (the apparent density was measured in compliance with JIS K7222.), an average thickness of 5.0 mm, and variations in the width-direction thickness within $\pm$20% of the average thickness. The variations in the thickness were measured in the same manner as in the extrusion moldability evaluation of the adhesion layer described below.

<Production of Closed-Cell Foam Water-Stop Sheet with Adhesion Layer>

Blended were 100 parts by mass of butyl rubber with 0.7 parts by mass of the phenolic antioxidant (2), 0.3 parts by mass of the sulfur-based antioxidant, 3 parts by mass of the carbon black, and 5 parts by mass of the petroleum resin-based tackifier (1) to obtain a mixture, which was continuously supplied into and melt-kneaded in an extruder, where a method in which the melted resin was bonded onto the closed-cell foam sheet at a resin pressure of the melt resin of 250 kg/cm$^2$, a pinch pressure of 0.1 kg/cm$^2$, and a pinch roll temperature of 50°C (extrusion molding) was employed to obtain a closed-cell foam water-stop sheet with an adhesion layer. The adhesion layer had a thickness of 0.15 mm.

Examples 2 to 18 and Comparative Examples 1 to 5, 7, 8

Closed-cell foam water-stop sheets with an adhesion layer were each obtained as in Example 1 except that the formulations in Tables 1 and 2 were used.

Comparative Example 6

Blended were 95 parts by mass of the acrylonitrile-butadiene rubber and 5 parts by mass of the liquid acrylonitrile-butadiene rubber, 16 parts by mass of ADCA (2), 1 part by mass of the phenolic antioxidant (2), 1 part by mass of the sulfur-based antioxidant, 1 part by mass of the carbon black, and 5 parts by mass of the rosin diol-based tackifier to obtain a blend, which was melt-kneaded and extruded in an extruder to obtain an uncrosslinked and unfoamed sheet.

The sheet obtained was irradiated with an electron beam at a dose of 1.2 Mrad and an accelerating voltage of 500 kV to obtain a crosslinked and unfoamed sheet.

The crosslinked and unfoamed sheet obtained was heated in a foaming furnace to 240°C to decompose and foam ADCA (2) to obtain a closed-cell foamed rubber sheet having an apparent density of 35 kg/m$^3$ and a thickness of 3.0 mm.

[Evaluation]

Peel adhesion force evaluation, water pressure resistance evaluation, 25% compression hardness evaluation, evaluation of adhesiveness to the closed-cell foam sheet, reworkability evaluation, and extrusion moldability evaluation described below were performed on the closed-cell foam water-stop sheets with an adhesion layer produced in Examples and Comparative Examples and the closed-cell foamed rubber sheet produced in Comparative Example 5. The results are shown in Tables 1 and 2. Since it was not possible to mold a closed-cell foam water-stop sheet in Comparative Example 3, no evaluations except the extrusion moldability evaluation of the adhesion layer were performed. Additionally, although it was possible to mold a closed-cell foam water-stop sheet in Comparative Example 6, the adhesion layer was not sufficiently bonded to the closed-cell foam sheet. Thus, no evaluations except the evaluation of adhesiveness between the adhesion layer and the closed-cell foam sheet and the extrusion moldability evaluation of the adhesion layer were performed.

<Peel Adhesion Force Evaluation>

• Evaluation method

The closed-cell foam water-stop sheets with an adhesion layer and the closed-cell foamed rubber sheet obtained in Examples and Comparative Examples were each cut into a test piece having a width of 25 mm and a length of 300 mm, which was attached to an acrylic plate. Then, the test piece was compressed by 50% with a coated steel plate having a thickness of 10 mm and left at 23°C for an hour. The compression was released after an hour, and the peel tackiness in the 180° direction was measured.

• Evaluation criteria

In this test, the measured value is preferably 2.0 N/25 mm or more, and more preferably 2.0 to 22.0 N/25 mm, in view of the reworkability.

<Water Pressure Resistance Evaluation by Ring Water Stop Test>

• Evaluation method

To the side opposite to the adhesion layer of each of the closed-cell foam water-stop sheet with an adhesion layer and the closed-cell foamed rubber sheet obtained in Examples and Comparative Examples, a double-sided tape (manufactured by SEKISUI CHEMICAL CO., LTD., "#5782") was bonded. The sheet was processed into a ring shape having an inner diameter of 40 mm and an outer diameter of 60 mm (seal width: 10 mm), compressed by 25% with two acrylic plates having a thickness of 10 mm, one of which had a through hole having a diameter of 10 mm in the center, and left at 23°C for an hour.
After an hour, the interior of the ring-shaped sealing material was filled with distilled water via the through hole with the compression ratio maintained to apply water pressure on the interior of the ring-shaped sealing material, and whether water leaked or not was determined.
After maintained at 5 kPa for 5 minutes, the water pressure was increased with an increment of 5 kPa and maintained at each pressure for 5 minutes. The pressure was increased until the water inside the ring-shaped sealing material leaked, and the maximum value of the pressure was determined. The upper limit of the measurement was 200 kPa.

• Evaluation criteria

In this test, the measured value is preferably 10 kPa or more, and more preferably 30 kPa.

<Evaluation of Long-Term Water Stop Properties>

• Evaluation method

To the side opposite to the adhesion layer of each of the closed-cell foam water-stop sheet with an adhesion layer and the closed-cell foamed rubber sheet obtained in Examples and Comparative Examples, a double-sided tape (manufactured by SEKISUI CHEMICAL CO., LTD., "#5782") was bonded. The sheet was processed into a ring shape having an inner diameter of 40 mm and an outer diameter of 60 mm (seal width: 10 mm) to prepare a test piece. A double-sided tape (manufactured by SEKISUI CHEMICAL CO., LTD., "#5782") was bonded to the side opposite to the adhesion layer, which was attached to an acrylic plate having a thickness of 10 mm. Then, to the adhesion layer side of the test piece, an aluminum pipe having an outer diameter of 50 mm, a wall thickness of 1.0 mm, a length of 70 mm, and a cut-face thickness accuracy of 1/100 mm was allowed to adhere, and water was supplied into the aluminum pipe such that a water pressure of 550 Pa was applied on the interior of the aluminum pipe. Then, the double-sided tape was attached to the upper part of the aluminum pipe, to which an acrylic plate having a thickness of 10 mm was attached. The test piece was compressed so as to have a thickness reduced to 50%, and left for 500 hours. After 500 hours, the compression on the test piece was released by gradually reducing the amount of the compression on the test piece, until the water inside the aluminum pipe leaked through the test piece. Then, the difference between the thickness of the test piece on water leakage and the thickness of the test piece on compression was calculated.

• Evaluation criteria

In this test, the difference is preferably 0.05 mm or more, and more preferably 0.1 mm or more.

<25% Compression Stress Evaluation>

• Measurement method

The closed-cell foam water-stop sheets with an adhesion layer obtained in Examples and Comparative Examples were each cut into samples having a length of 30 mm and a width of 30 mm, which were laminated to form a rectangular parallelepiped having a thickness of 25 mm. The sample was sandwiched with plates larger than the sample, and compressed at a rate of 10 mm/min at a temperature of 23°C. When the thickness was reduced to 18.75 mm (25% of the original thickness was compressed), the stress (strain) was measured.

<Evaluation of Adhesion between Adhesion Layer and Closed-Cell Foam Sheet>

• Evaluation method

The adhesion layers and the closed-cell foam sheets of the closed-cell foam water-stop sheets with an adhesion layer each obtained in Examples and Comparative Examples were evaluated in compliance with the tensile strength test method B of JIS K6767-1995.

Specifically, a test piece was a rectangular parallelepiped having a length of 50 mm, a width of 50 mm, and a thickness of 10 mm. After the thickness of the test piece was measured at the center, the test piece was sandwiched with a jig. Both sides of the closed-cell foam water-stop sheet with an adhesion layer were bonded to the jig with the same double-sided tape (manufactured by SEKISUI CHEMICAL CO., LTD., "#5782"). After bonding was completed, tensile test was performed at a tensile rate of 10 mm/min.

• Criteria

G: the case of 1 kgf/cm$^2$ or more (good adhesion)
B: the case of less than 1 kgf/cm$^2$ (insufficient adhesion)

<Reworkability Evaluation>

• Evaluation method

The closed-cell foam water-stop sheets with an adhesion layer and the closed-cell foamed rubber sheet obtained in Examples and Comparative Examples were each cut into a test piece having a width of 25 mm and a length of 300 mm, which was attached to an acrylic plate. Then, the test piece was compressed by 50% with a coated steel plate having a thickness of 10 mm, and left at 23°C for an hour. The compression was released after an hour, and measurement of the peel tackiness in the 180° direction was performed. This measurement was repeated five times, and evaluation was performed in accordance with the following criteria.

• Criteria

G: the case where the closed-cell foam sheet did not exhibit cohesive failure in any of the five measurements
B: the case where the closed-cell foam sheet exhibited cohesive failure once in five times

<Moldability (Warpage) Evaluation>

The closed-cell foam water-stop sheets with an adhesion layer obtained in Examples and Comparative Examples were each cut into a piece of 500 mm x 500 mm and place on a flat stage. Evaluation was performed by visually observing whether a portion of the cut closed-cell foam water-stop sheet was released and lifted from the stage by 15 mm or more.

• Criteria

G: the case where there is no warpage
B: the case where there is warpage

<Extrusion Moldability Evaluation of Adhesion Layer>

• Evaluation method

After kneading using a Banbury mixer according to the formulations of an adhesion layer described in Tables 1 and 2, extrusion sheets were molded by an extruder under the condition of 80 kg/hr, and the average thickness was measured for the thickness of the extrusion sheets obtained. Then, thickness was measured at 10 points with an interval of 10 cm in the width direction of the extrusion sheet, and the absolute value of the difference from the average thickness at each point was calculated. The asperities were evaluated with respect to the number of the measured values of which absolute value was 20% or more of the average thickness in accordance with the following criteria.

• Criteria

G: the case where there is no absolute value which is 20% or more of the average thickness
B: the case where there are one or more absolute values which are 20% or more of the average thickness

[Table 1]

| | | | Example | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Adhesion layer (parts by mass) | (a1) Component | Butyl rubber (1) | 100.0 | 95.0 | 90.0 | 70.0 | 50.0 | 30.0 | 10.0 | 80.0 | 30.0 | 30.0 | 30.0 | 30.0 | 30.0 |
| | | Butyl rubber (2) | - | - | - | - | - | - | - | - | - | - | - | - | - |
| | (a2) Component | Ethylene-propylene-diene rubber (1) | - | 5.0 | 10.0 | 30.0 | 50.0 | 70.0 | 90.0 | 20.0 | 70.0 | 70.0 | 70.0 | 70.0 | 70.0 |
| | | Ethylene-propylene-diene rubber (2) | - | - | - | - | - | - | - | - | - | - | - | - | - |
| | (B) Component | Petroleum resin-based tackifier (1) | 5.0 | 5.0 | 5.0 | 5.0 | 5.0 | 5.0 | 5.0 | 5.0 | 3.0 | 1.0 | 1.0 | 5.0 | 5.0 |
| | | Petroleum resin-based tackifier (2) | - | - | - | - | - | - | - | - | - | - | - | - | - |
| | | Petroleum resin-based tackifier (3) | - | - | - | - | - | - | - | - | - | - | - | - | - |
| | | Acrylonitrile-butadiene rubber | - | - | - | - | - | - | - | - | - | - | - | - | - |
| | | Liquid acrylonitrile-butadiene rubber | - | - | - | - | - | - | - | - | - | - | - | - | - |
| | | Phenolic antioxidant (2) | 0.7 | 0.7 | 0.7 | 0.7 | 0.7 | 0.7 | 0.7 | 0.7 | 0.7 | 0.7 | 0.7 | 0.7 | 0.7 |
| | | Sulfur-based antioxidant | 0.3 | 0.3 | 0.3 | 0.3 | 0.3 | 0.3 | 0.3 | 0.3 | 0.3 | 0.3 | 0.3 | 0.3 | 0.3 |
| | | Carbon black | 3.0 | 3.0 | 3.0 | 3.0 | 3.0 | 3.0 | 3.0 | 3.0 | 3.0 | 3.0 | 3.0 | 3.0 | 3.0 |
| | | Rosin diol-based tackifier | - | - | - | - | - | - | - | - | - | - | - | - | - |
| | | Terpene phenol-based tackifier | - | - | - | - | - | - | - | - | - | - | - | - | - |
| Closed-cell foam sheet thickness (mm) | | | 5.0 | 5.0 | 5.0 | 5.0 | 5.0 | 5.0 | 5.0 | 5.0 | 5.0 | 5.0 | 3.0 | 3.0 | 1.0 |
| Closed-cell foam sheet apparent density (kg/m$^3$) | | | 33 | 33 | 33 | 33 | 33 | 33 | 33 | 33 | 33 | 33 | 33 | 100 | 100 |
| Closed-cell foam sheet closed cell ratio (%) | | | 92 | 92 | 92 | 92 | 92 | 92 | 92 | 92 | 92 | 92 | 92 | 95 | 95 |
| Adhesion layer thickness (mm) | | | 0.15 | 0.15 | 0.15 | 0.15 | 0.15 | 0.15 | 0.15 | 0.15 | 0.15 | 0.15 | 0.15 | 0.15 | 0.15 |
| Evaluation | | Peel adhesion force (N/25mm) | 24.0 | 22.0 | 19.4 | 15.2 | 8.2 | 4.3 | 2.4 | 17.5 | 3.7 | 2.2 | 4.2 | 4.5 | 4.4 |
| | | Water pressure resistance by ring water stop test (kPa) | 200 | 200 | 200 | 200 | 160 | 100 | 30 | 200 | 70 | 15 | 100 | 110 | 110 |
| | | Long-term water stop properties (mm) | 0.24 | 0.24 | 0.24 | 0.24 | 0.24 | 0.24 | 0.12 | 0.24 | 0.12 | 0.12 | 0.24 | 0.24 | 0.24 |
| | | 25% compression stress (kPa) | 35 | 35 | 35 | 35 | 35 | 35 | 35 | 35 | 35 | 35 | 35 | 84 | 87 |
| | | Adhesion between adhesion layer and closed-cell foam sheet | G | G | G | G | G | G | G | G | G | G | G | G | G |
| | | Reworkability | B | G | G | G | G | G | G | G | G | G | G | G | G |
| | | Moldability (Warpage) | G | G | G | G | G | G | G | G | G | G | G | G | G |
| | | Adhesion layer extrusion moldability | G | G | G | G | G | G | G | G | G | G | G | G | G |

14

[Table 2]

| | | | Example | | | | | Comparative Example | | | | | | | |
|---|---|---|---|---|---|---|---|---|---|---|---|---|---|---|---|
| | | | 14 | 15 | 16 | 17 | 18 | 1 | 2 | 3 | 4 | 5 | 6[*1] | 7 | 8 |
| Adhesion layer (parts by mass) | (a1) Component | Butyl rubber (1) | 30.0 | 30.0 | - | 30.0 | 30.0 | 5.0 | 30.0 | 30.0 | 30.0 | 30.0 | - | 30.0 | - |
| | | Butyl rubber (2) | - | - | 30.0 | - | - | - | - | - | - | - | - | - | - |
| | (a2) Component | Ethylene-propylene-diene rubber (1) | 70.0 | 70.0 | 70.0 | - | - | 95.0 | 70.0 | 70.0 | 70.0 | 70.0 | - | 70.0 | - |
| | | Ethylene-propylene-diene rubber (2) | - | - | - | 70.0 | - | - | - | - | - | - | - | - | - |
| | | Ethylene-propylene-diene rubber (3) | - | - | - | - | 70.0 | - | - | - | - | - | - | - | - |
| | (B) Component | Petroleum resin-based tackifier (1) | - | - | 5.0 | 5.0 | 5.0 | 5.0 | - | - | 0.4 | 5.0 | - | 5.0 | - |
| | | Petroleum resin-based tackifier (2) | 5.0 | | - | - | - | - | - | - | - | - | - | - | - |
| | | Petroleum resin-based tackifier (3) | - | 5.0 | - | - | - | - | - | - | - | - | - | - | - |
| | | Acrylonitrile-butadiene rubber | - | - | - | - | - | - | - | - | - | - | 95 | - | - |
| | | Liquid acrylonitrile-butadiene rubber | - | - | - | - | - | - | - | - | - | - | 5 | - | - |
| | | Phenolic antioxidant (2) | 0.7 | 0.7 | 0.7 | 0.7 | 0.7 | 0.7 | 0.7 | 0.7 | 0.7 | 0.7 | 1 | 0.7 | - |
| | | Sulfur-based antioxidant | 0.3 | 0.3 | 0.3 | 0.3 | 0.3 | 0.3 | 0.3 | 0.3 | 0.3 | 0.3 | 1 | 0.3 | - |
| | | Carbon black | 3.0 | 3.0 | 3.0 | 3.0 | 3.0 | 3.0 | 3.0 | 3.0 | 3.0 | 3.0 | 1 | 3.0 | - |
| | | Rosin diol-based tackifier | - | - | - | - | - | - | 5.0 | - | - | - | 5 | - | - |
| | | Terpene phenol-based tackifier | - | - | - | - | - | - | - | 5.0 | - | - | - | - | - |
| Closed-cell foam sheet thickness (mm) | | | 5.0 | 5.0 | 5.0 | 5.0 | 5.0 | 5.0 | 5.0 | 5.0 | 5.0 | 5.0 | 5.0 | 4.5 | 5.0 |
| Closed-cell foam sheet apparent density(kg/m$^3$) | | | 33 | 33 | 33 | 33 | 33 | 33 | 33 | 33 | 33 | 33 | 33 | 33 | 33 |
| Closed-cell foam sheet closed cell ratio (%) | | | 92 | 92 | 92 | 92 | 92 | 92 | 92 | 92 | 92 | 92 | 92 | 69 | 92 |
| Adhesion layer thickness (mm) | | | 0.15 | 0.15 | 0.15 | 0.15 | 0.15 | 0.15 | 0.15 | 0.15 | 0.15 | 2.10 | 0.15 | 0.15 | - |
| Evaluation | | Peel adhesion force (N/25mm) | 2.0 | 7.6 | 4.1 | 3.9 | 4.2 | 1.3 | 0.9 | - | 0.5 | 2.2 | 1.5 | 3.7 | 2.0 |
| | | Water pressure resistance by ring water stop test(kPa) | 20 | 180 | 100 | 100 | 100 | 7 | 5 | - | 5 | 5 | - | 0 | 10 |
| | | Long-term water stop properties (mm) | 0.12 | 0.24 | 0.24 | 0.24 | 0.24 | 0 | 0 | - | 0 | 0 | - | 0 | 0 |
| | | 25% compression stress (kPa) | 35 | 35 | 35 | 35 | 35 | 35 | 35 | - | 35 | 57 | - | 17 | 9.2 |
| | | Adhesion between adhesion layer and closed-cell foam sheet | G | G | G | G | G | G | G | - | G | G | B | G | - |
| | | Reworkability | B | G | G | G | G | G | G | - | G | G | - | G | G |
| | | Moldability (Warpage) | G | G | G | G | G | G | G | - | G | B | - | G | G |
| | | Adhesion layer extrusion moldability | G | B | B | B | G | G | G | B | G | G | G | G | G |

*1: Sixteen parts by mass of ADCA (2) was further blended.

As is clear from the results in Tables 1 and 2, the closed-cell foam water-stop sheet with an adhesion layer of the present invention has high adhesiveness to an adherend surface and is excellent in water stop properties.

**Claims**

1. A closed-cell foam water-stop sheet with an adhesion layer, wherein the closed-cell foam water-stop sheet comprises:

   the adhesion layer that comprises a rubber component (A) having a total content of 80% by mass or more of a butyl rubber (a1) and an ethylene-propylene-diene rubber (a2), and a petroleum resin-based tackifier (B), the adhesion layer having a thickness of 0.01 to 2.0 mm; and
   a closed-cell foam sheet having a closed cell ratio of 70% or more, the closed-cell foam sheet being integrally attached to the adhesion layer, and
   wherein a mass ratio of the ethylene-propylene-diene rubber (a2) to the butyl rubber (a1) [(a2)/(a1)] is 0/100 to 93/7,
   a content of the petroleum resin-based tackifier (B) is 0.5 to 20 parts by mass based on 100 parts by mass of the rubber component (A), and
   the closed-cell foam water-stop sheet with an adhesion layer has a 25% compression stress of 10 to 800 kPa.

2. The closed-cell foam water-stop sheet with an adhesion layer according to claim 1, wherein the closed-cell foam sheet is an olefin-based resin foam.

3. The closed-cell foam water-stop sheet with an adhesion layer according to claim 1 or 2, wherein the closed-cell foam sheet has an apparent density of 15 to 700 kg/m$^3$.

4. The closed-cell foam water-stop sheet with an adhesion layer according to any of claims 1 to 3, wherein the Mooney viscosity ML (1 + 8) of the butyl rubber (a1) at 125°C is 20 to 60.

5. The closed-cell foam water-stop sheet with an adhesion layer according to any of claims 1 to 4, wherein the closed-cell foam sheet has a thickness of 0.05 to 15 mm.

6. The closed-cell foam water-stop sheet with an adhesion layer according to any of claims 1 to 5, wherein the adhesion layer has a thickness of 0.03 to 1.0 mm.

7. The closed-cell foam water-stop sheet with an adhesion layer according to any of claims 1 to 6, wherein the mass ratio [(a2)/(a1)] is 1/99 to 90/10.

8. The closed-cell foam water-stop sheet with an adhesion layer according to any of claims 1 to 7, wherein the closed-cell foam sheet has a closed cell ratio of 80 to 100%.

## INTERNATIONAL SEARCH REPORT

| International application No. |
| --- |
| PCT/JP2015/054771 |

**A. CLASSIFICATION OF SUBJECT MATTER**
*B32B25/04*(2006.01)i, *B32B5/18*(2006.01)i, *B32B27/00*(2006.01)i, *C08J9/36*(2006.01)i, *C09K3/10*(2006.01)i

According to International Patent Classification (IPC) or to both national classification and IPC

**B. FIELDS SEARCHED**

Minimum documentation searched (classification system followed by classification symbols)
B32B1/00-43/00, C08J9/00-9/42, C09K3/10-3/12

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2009/028419 A1 (Sekisui Chemical Co., Ltd.), 05 March 2009 (05.03.2009), claims 1, 2; paragraphs [0001], [0011], [0012], [0018], [0020], [0039], [0047]; examples; fig. 1 & US 2010/0178459 A1 & EP 2194108 A1 & KR 10-2010-0052481 A & CN 101784633 A | 1-8 |
| Y | JP 2003-003619 A (Takenaka Corp.), 08 January 2003 (08.01.2003), paragraph [0028] (Family: none) | 1-8 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 May 2015 (14.05.15) | 26 May 2015 (26.05.15) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

| International application No. |
|---|
| PCT/JP2015/054771 |

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2013-010957 A　(Nitto Denko Corp.),<br>17 January 2013 (17.01.2013),<br>paragraph [0022]<br>& US 2012/0326391 A1　　& EP 2541104 A2<br>& CN 102850950 A | 1-8 |
| Y | JP 2009-258274 A　(Sekisui Chemical Co., Ltd.),<br>05 November 2009 (05.11.2009),<br>paragraph [0074]<br>(Family: none) | 1-8 |
| A | JP 2010-177356 A　(Sekisui Chemical Co., Ltd.),<br>12 August 2010 (12.08.2010),<br>entire text<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007072885 A

- WO 2011039877 A